**Europäisches Patentamt**

**European Patent Office**

**Office européen des brevets**

(19)

(11) Numéro de publication : **0 490 799 A1**

## (12) DEMANDE DE BREVET EUROPEEN

(21) Numéro de dépôt : **91460050.7**

(22) Date de dépôt : **06.12.91**

(51) Int. Cl.⁵ : **H04N 7/133**

(30) Priorité : **07.12.90 FR 9015536**

(43) Date de publication de la demande :
**17.06.92 Bulletin 92/25**

(84) Etats contractants désignés :
**DE GB**

(71) Demandeur : **FRANCE TELECOM, CNET
(Centre National d'Etudes des
Télécommunications)
38-40, rue du Général Leclerc
F-92131 ISSY LES MOULINEAUX (FR)**

(71) Demandeur : **TELEDIFFUSION DE FRANCE
S.A.
21-27, rue Barbès
F-92542 Montrouge Cédex (FR)**

(72) Inventeur : **Henot, Jean-Pierre
10 Square Général Paris de Bollardière
F-35700 Rennes (FR)**

(74) Mandataire : **Corlau, Vincent
c/o Cabinet Vidon Immeuble Germanium 80
avenue des Buttes de Coesmes
F-35700 Rennes (FR)**

(54) **Dispositif et procédé de codage des images et système de transmission et récepteur correspondants.**

(57) L'invention concerne le codage d'images numériques appartenant à une séquence d'images. Elle a notamment pour objectif de fournir un dispositif réalisant un codage correspondant soit à un codage par trame, soit à un codage par image.

Cet objectif est atteint à l'aide d'un dispositif de codage d'images numériques appartenant à une séquence d'images, du type comprenant des moyens de découpage de chacune desdites images en blocs d'image et des moyens de transformation mathématique desdits blocs d'image, comprenant des moyens de réarrangement de l'ordre des lignes constitutives de chacun desdits blocs avant ladite transformation mathématique, ledit réarrangement étant variable en fonction d'une information de décision émise par des moyens d'analyse psychovisuelle. Notamment, lesdits moyens de réarrangement de l'ordre des lignes peuvent assurer, dans une première position, la conservation de l'ordre d'origine dans l'image desdites lignes, et dans une seconde position, le regroupement d'une part des lignes impaires (11), et d'autre part des lignes paires (12).

X  Trame 1
O  Trame 2

Fig. 1B

EP 0 490 799 A1

Le domaine de l'invention est celui du codage d'images numériques appartenant à une séquence d'images. L'invention s'applique notamment à la transmission d'images sur canaux numériques, ainsi qu'aux dispositifs de stockage d'images.

Plus précisément, l'invention concerne un dispositif de codage d'images numériques, notamment en vue de leur compression, du type réalisant le découpage des blocs dans l'image et à l'application d'une transformation réversible sur chaque bloc, dans lequel les blocs d'image sont adaptés, avant transformation, en fonction d'une information psychovisuelle.

L'invention peut ainsi être mise en oeuvre pour la transmission de signaux de télévision. Elle peut par exemple être utilisée dans les studios de télévision, où la transmission et les différents traitements sont de plus en plus réalisés de façon numérique. Elle s'applique également à la transmission de signaux numériques d'images, par exemple par satellite ou par voie hertzienne (diffusion terrestre).

Un autre domaine d'application de l'invention est la transmission sur le réseau commuté, en particulier par l'intermédiaire des réseaux numériques, tels que le RNIS large bande. Elle peut notamment s'appliquer à la visiophonie et à la télésurveillance.

A titre d'exemples, l'invention peut être utilisée dans les systèmes de transmission de télévision sur des canaux à 34 Mbits/s et les systèmes de visioconférence à 384 kbits/s, actuellement en cours de normalisation.

L'invention concerne également tous les dispositifs de stockage d'images, dont elle permet d'augmenter la capacité tout en assurant une bonne qualité d'image. Elle peut être utilisée par exemple dans les magnétoscopes, ainsi que dans tous les supports de bases de données, tels que les disques optiques.

Du fait de la multiplication des canaux numériques et de leur transparence vis à vis des données transmises, l'utilisation de canaux numériques pour la transmission d'images devrait s'accroître de façon notable dans les années à venir.

Le débit de transmission des différents réseaux numériques existant ne permet toutefois pas de transmettre des images animées en temps reel. Il convient donc de comprimer l'information contenue dans ces images, notamment en supprimant les redondances. De même, pour des raisons de taille de mémoire, il est intéressant de pouvoir réduire la place occupée par une image dans les différents moyens de stockage. Par ailleurs, il est évidemment souhaitable de faire en sorte que le signal d'origine soit le moins possible détérioré. En règle générale, on tente donc d'effectuer un codage conjuguant les qualités de compression de l'image et de conversation de la la qualité de l'image source, notamment du point de vue psychovisuel.

On connaît déjà des systèmes de compression d'images numériques.

De telles chaînes de traitement peuvent par exemple comprendre un découpage de l'image en blocs de quelques points d'image, et une transformation mathématique de chacun de ces blocs. Ce passage dans le domaine fréquentiel permet de réduire la quantité d'information à coder. En effet, dans l'espace transformé, l'énergie est répartie sur un nombre beaucoup plus petit de points que dans l'espace d'origine.

Par ailleurs, il est possible de fiitrer, suivant des critères psychovisuels, le spectre d'un bloc d'image transformé. On sait en effet que certains coefficients du bloc transformé ont, d'un point de vue résultat visuel, moins d'importance que d'autres.

Les coefficients sont ensuite quantifiés, puis codés, avant d'être transmis ou stockés.

De façon à réduire le nombre d'informations à quantifier, on peut également utiliser des moyens de prédiction. On essaie alors de prédire, à partir du bloc précédent, le contenu du bloc courant, puis on détermine la différence entre le bloc prédit et le bloc réel, ou erreur de prédiction. On ne code alors que cette erreur, en général beaucoup moins riche en informations que le bloc réel. Le décodeur dispose des mêmes moyens de prédiction, afin de reconstituer le bloc.

En ce qui concerne les images transmises sous forme de deux trames entrelacées, on constate d'autre part qu'il peut être, d'un point de vue résultat visuel, préférable de coder chaque bloc soit par trames, soit sur l'image entière reconstruite, notamment en fonction de la quantité de mouvement existant dans le bloc considéré.

De façon classique, il est habituel de former les blocs à coder à partir des lignes d'une même trame. Cela permet en particulier de minimiser la taille mémoire nécessaire au codeur et au décodeur. Dans ce cas, l'éventuel codage temporel s'effectue par différence entre les blocs à coder et les blocs déjà codés de la trame précédente de même parité. Ce type de codage s'avère particulièrement efficace pour les images en mouvement.

En revanche, il apparaît, de façon assez évidente, que dans le cas d'images ou des zones d'images immobiles ou en faible mouvement, il est plus intéressant de tenir compte de l'image complète, et donc de construire les blocs à partir des lignes des deux trames entrelacées, de façon à profiter de la corrélation verticale dans l'image. Cependant, un tel codage par blocs composés de lignes de l'image complète pose d'importants problèmes de restitution dans les zones à fort mouvement, notamment en ce qui concerne les contours en mouvement.

En d'autres termes, il est donc nécessaire, pour obtenir une qualité d'image optimisée dans tous les cas, de coder les zones en mouvement à partir de blocs composés de lignes d'une seule trame et les zones fixes à partir de blocs composés de lignes de l'image complète (et donc des deux trames entrelacées), parce qu'il y a une plus forte corrélation entre les lignes de la trame qu'entre les lignes de l'image pour les zones en mouvement et vice versa pour les zones fixes.

On connaît déjà des procédés tentant de répondre à cette contrainte.

Le document "Block adaptative frame/field DCT coding decided by the vertical test" (codage de bloc adaptatif trame/image par DCT en fonction du test de différence verticale) (R. Kutka ; Third International Workshop on HDTV ; 30-31 Août, 1er septembre 1989 ; Turin) propose ainsi de choisir pour chaque bloc d'image, de taille 16 x 16 dans l'exemple décrit, entre le codage dans l'image du bloc 16 x 16 et le codage en trame de deux blocs de 16 points par 8 lignes.

Cette première solution présente l'inconvénient d'imposer, au codeur et au décodeur, la présence de moyens de calcul de deux transformations (DCT dans le cas présent) de tailles différentes.

On a également envisagé d'effectuer le choix du traitement en trame ou en image sur des zones d'image ("superblocs") de 8 points sur 16 lignes. En traitement image, 2 blocs de 8 points par 8 lignes contigus sont codés, alors qu'en traitement trame ce sont 2 blocs entrelacés de 8 points par 8 lignes qui sont codés.

Dans ce cas, la zone d'image sur laquelle la décision trame/image est réalisée est déjà relativement large et assez souvent peu appropriée pour l'ensemble de la zone, du point de vue de l'homogénéite du mouvement. Le codage est alors relativement dégradé. Il peut par exemple y avoir du mouvement dans le premier bloc, et non dans le second. Par ailleurs, cette technique impose des mémoires avant transformation de taille double de celles nécessaires à la mémorisation d'un bloc.

L'invention a notamment pour objectif de pallier ces différents inconvénients de l'état de la technique.

Plus précisément, l'invention a pour objectif de fournir un dispositif de codage d'images numériques par transformation de bloc d'images de taille unique et prétraités de façon à obtenir une image finale optimisée.

Notamment, l'invention a pour objectif de fournir un tel dispositif réalisant un codage correspondant soit à un codage par trame, soit à un codage par image.

Un autre objectif de l'invention est de fournir un tel dispositif de codage, dans lequel la décision de codage trame/image est prise par analyse d'une zone d'image de taille restreinte à la taille d'un bloc à coder. Il est important en effet qu'une telle décision soit prise sur une zone suffisamment limitée pour rester sensiblement homogène.

L'invention a également pour objectif de fournir un tel dispositif insérable dans toutes les chaines de codage d'images numériques entrelacées existantes et mettant en oeuvre une transformation mathématique.

Un objectif particulier de l'invention est de fournir un tel dispositif de codage nécessitant une puissance de calcul et un temps de traitement très réduits, et pratiquement négligeables devant les autres traitements effectués dans la chaîne de codage.

L'invention a également pour objectif de fournir un tel dispositif, ne requérant pas de mémoire supplémentaire, et pouvant notamment exploiter directement la mémoire de bloc déjà présente dans une chaine de traitement classique.

De façon complémentaire, l'invention a pour objectif de fournir un système de transmission mettant en oeuvre un tel dispositif, un récepteur permettant de reconstruire les images transmises selon ce système, et le procédé mis en oeuvre dans un tel dispositif.

Ces objectifs, ainsi que d'autres qui apparaîtront par la suite, sont atteints selon l'invention à l'aide d'un dispositif de codage d'images numériques appartenant à une séquence d'images, du type comprenant des moyens de découpage de chacune desdites images en blocs d'image et des moyens de transformation mathématique desdits blocs d'image, comprenant des moyens de réarrangement de l'ordre des lignes constitutives de chacun desdits blocs avant ladite transformation mathématique, ledit réarrangement étant variable en fonction d'une information de décision émise par des moyens d'analyse psychovisuelle.

Le terme réarrangement doit être ici lu dans une acception large, englobant notamment un réarrangement identique (au sens mathématique du mot), conservant l'ordre d'origine des lignes.

Ces moyens de réarrangement permettent d'organiser l'ordre des lignes constitutives du bloc à coder de façon à limiter le plus possible les perturbations dans l'image finale reconstruite, selon le contenu de l'image.

Avantageusement, lesdits moyens de réarrangement de l'ordre des lignes assurent, dans une première position, la conservation de l'ordre d'origine dans l'image desdites lignes, et dans une seconde position le regroupement d'une part des lignes impaires, et d'autre part des lignes paires.

Dans ce cas, le dispositif effectue donc soit un codage par image, soit un codage par trame. En effet, dans la seconde position, on a séparé les lignes appartenant à la trame impaire, affectées par exemple à la première moitié des lignes du bloc à transformer, des lignes appartenant à la trame paire, affectées alors à la seconde moitié des lignes. On assure ainsi une décorrélation maximum entre les composantes de chacune des trames.

On notera que, quelque soit le choix de codage, la décision est préférentiellement prise après analyse du bloc reconstruit, correspondant à l'image complète.

De façon préférentielle, lesdits moyens d'analyse psychovisuelle prennent en compte l'amplitude du mouvement dans ledit bloc et/ou l'erreur de prédiction fournies par des moyens d'estimation du mouvement.

En effet, ainsi que cela a déjà été mentionné, le choix d'un codage par trame ou par image dépend notamment de la quantité de mouvement dans chaque bloc. Par ailleurs, il est clair qu'il est avantageux de tenir compte de l'erreur de prédiction pour obtenir, à la reconstruction, l'image la plus fidèle possible par rapport à l'image source.

Dans un mode de réalisation avantageux, lesdits moyens de réarrangement de l'ordre des lignes comprennent une mémoire de bloc et des moyens d'adressage de ladite mémoire de bloc.

Si les blocs à coder ont un nombre de lignes égal à une puissance entière de 2, lesdits moyens comprennent avantageusement un compteur de lignes et des moyens de décalage d'une position vers la gauche de la valeur binaire produite par ledit compteur, lesdits moyens de décalage étant actifs lorsque lesdits moyens de réarrangement sont dans ladite seconde position.

Ainsi, l'opération de réarrangement s'avère très simple. Un registre à décalage ou un jeu de quelques opérateurs logiques suffisent pour réaliser ledit réarrangement de l'ordre des lignes.

Préférentiellement, lesdits blocs sont des blocs de 4x4, 8x8, ou 16x16 pixels.

En effet, il est préférable, notamment pour l'opération de transformation, d'opérer sur des blocs carrés, de largeur égale à une puissance de 2. De plus, il semble que la taille 16 x 16 soit pratiquement une taille limite, notamment du point de vue de l'homogénéité des mouvements dans le bloc.

De façon avantageuse, ladite transformation mathématique appartient au groupe comprenant:
- transformation en cosinus discret (TCD) ;
- transformation de Fourier ;
- transformation de Haar ;
- transformation de Hadamard.

L'invention concerne également un système de transmission d'images numériques appartenant à une séquence d'images, comprenant un dispositif de codage d'images tel que présenté ci-dessus.

Un tel système comprend notamment, à l'émission, des moyens de transmission d'une information de sélection du type de réarrangement effectué sur chacun desdits blocs, et à la réception, des moyens de reconstruction desdits blocs en fonction de ladite information de sélection.

Il est en effet nécessaire qu'une telle information soit transmise aux récepteurs. Ceux-ci ne disposent pas de moyens d'analyse et de sélection d'un mode de traitement. Ils reconstruisent directement l'image en fonction de données d'assistance.

L'invention concerne bien sûr aussi de tel récepteurs.

Dans le cas d'un système appliqué à la transmission d'un signal de télévision comprenant une composante de luminance et au moins une composante de chrominance, on peut par exemple prévoir que seule ladite composante de luminance est appliquée audit dispositif de codage, lesdites composantes de chrominance étant systématiquement sous-échantillonnées de façon à ne transmettre qu'une ligne sur deux de l'image.

Enfin, l'invention concerne également le procédé de codage mis en oeuvre dans les dispositifs décrits plus haut. Un tel procédé comprend notamment avantageusement les étapes suivantes :
- découpage de chacune desdites images en blocs d'image ;
- analyse psychovisuelle de chacun desdits blocs, et émission d'une information de décision ;
- réarrangement de l'ordre des lignes constitutives de chacun desdits blocs en fonction de ladite information de décision ;
- transformation mathématique réversible de chacun desdits blocs réarrangés.

D'autres caractéristiques et avantages de l'invention apparaîtront à la lecture suivante d'un mode de realisation préférentiel de l'invention, donné à titre illustratif et non limitatif, et des dessins annexés, dans lesquels :
- les figures 1A et 1B illustrent le principe de réarrangement selon l'invention. Plus précisément, la figure 1A présente le réarrangement "identique" effectué dans le cas du codage "par image" d'un bloc, et la figure 1B le réarrangement effectué dans le cas d'un codage "par trame" ;
- la figure 2 représente le schéma fonctionnel d'un mode de mise en oeuvre préférentiel de la décision trame/image suivant l'invention ;
- la figure 3 présente le schéma fonctionnel d'un mode de réalisation préférentiel de la commutation trame/image selon l'invention ;
- la figure 4 est le schéma de principe d'une chaîne de codage de la luminance d'un système de transmission selon l'invention ;
- la figure 5 est le schéma de principe d'une chaîne de décodage de la luminance correspondant à la chaîne de codage de la figure 4.

La transmission d'images sur des canaux numériques nécessite plusieurs étapes. Il faut tout d'abord numériser l'image. Il existe à cet effet des normes au niveau des organismes de radiodiffusion, telle que la recommandation 601 du CCIR. Il est ensuite nécessaire d'adapter le débit résultant de cette numérisation (216 Mbits/s dans le cas de l'image numérique définie dans la recommandation 601 du CCIR) à la capacité du canal. Cette adaptation du débit correspond au codage des images, à l'émetteur, et au décodage, au récepteur.

On connaît de nombreuses techniques de codage. D'une manière générale, le codage, ou réduction de débit, s'obtient en trois étapes. Il est tout d'abord nécessaire de représenter l'image de la manière la plus compacte possible en utilisant les redondances existantes dans l'image ou la séquence d'images. Ensuite, il faut quantifier, de manière généralement plus grossière, cette nouvelle représentation de l'image. Enfin, il faut attribuer à chaque valeur quantifiée un mot de code qui sera transmis et permettra au décodeur de reconstruire la suite d'images transmises.

La réduction de débit provient de l'ensemble de ces différentes étapes.

La première étape est réversible, c'est-à-dire que lorsqu'on effectue l'opération inverse, on retrouve l'information d'origine. C'est l'étape de prédiction en codage prédictif (MICD), ou de transformation de l'image en codage par transformation temps-fréquence.

Dans le cas des techniques prédictives, on essaie de prédire pour chaque point à transmettre la valeur de ce point, à partir des points déjà transmis, de façon que le décodeur puisse opérer de manière similaire. On effectue alors la différence entre le point à coder et la valeur prédite. Cette nouvelle valeur est appelée erreur de prédiction. Alors que les valeurs des points de l'image à coder sont sensiblement équiprobables, les valeurs des erreurs de prédiction sont bien moins nombreuses et fortement concentrées autour de la valeur 0.

En ce qui concerne les techniques de transformation, l'idée de base consiste à prendre une sous-image de l'image complète, et à effectuer sur cette sous-image une transformation mathématique réversible, telles que les transformations de Fourier, Haar, Hadamard ou discrète en cosinus. L'intérêt de cette opération est que, dans l'espace transformé, l'énergie est répartie sur un nombre beaucoup plus faible de points.

Actuellement, la transformation la plus couramment utilisée est la transformation discrète en cosinus (DCT). Une des raisons de son emploi, en plus de bonnes caractéristiques d'efficacité en terme de compression, est l'existence d'un circuit intégré effectuant le calcul de cette opération en temps réel pour la télévision, à une fréquence d'horloge de 13,5 MHz, sur des blocs de taille 4 par 4 jusqu'à 16 par 16.

On connaît également le codage en sous-bandes, méthode basée sur le découpage en bande de fréquences de l'image d'origine par des bancs de filtres numériques, tels que des filtres miroir. Cela permet d'exploiter le fait que la majeure partie de l'information est contenue dans les bandes de fréquences faibles.

Ces différentes méthodes, ainsi que d'autres, peuvent être combinées. Il est par exemple possible de subdiviser l'image en blocs de 8 points par 8 lignes, puis de réaliser pour chacun des blocs une prédiction temporelle, en fonction des blocs de l'image précédente mis en mémoire, et enfin d'effectuer sur les blocs obtenus par différence temporelle, ou prédiction temporelle, une transformation discrète en cosinus.

Ce type de codage est appelé codage hybride.

La seconde étape, la quantification, est une étape irréversible : une partie de l'information est définitivement perdue, mais de préférence là où sa perte sera le moins visible.

La quantification consiste à attribuer à un ensemble de valeurs dans un certain espace une valeur unique, ou représentant, de façon irréversible, la valeur avant quantification étant alors est perdue.

Cette attribution de représentants peut se faire de manière systématique (quantification fixe) ou variable en fonction du contexte local (quantification adaptative).

On dispose principalement deux types de quantification : la quantification scalaire, dans un espace à une dimension, et la quantification vectorielle, dans un espace à plus d'une dimension. Dans le cas de la quantification scalaire, existent les quantifications linéaire, ou uniforme, et non linéaire.

La troisième étape, l'attribution de mots de code aux valeurs quantifiées, est également réversible. Le débit peut encore être réduit par l'utilisation de codes à longueur variable qui attribuent des mots de code de longueur la plus courte aux événements les plus fréquents. Les codes de Huffman sont un exemple de ce type de code. Dans ce cas, on attribue aux valeurs qui apparaissent le plus souvent des codes de longueur courte, les valeurs apparaissant moins souvent ayant en contrepartie une longueur de mot code supérieure. En moyenne, mais au prix d'une complexité accrue, le débit est inférieur à celui d'un code à longueur fixe.

Les techniques de codage les plus évoluées et les plus couramment utilisées à l'heure actuelle utilisent les techniques de transformation discrète en cosinus, l'estimation de la compensation de mouvement pour la prédiction temporelle, et des codes à longueur variable.

De tels systèmes sont actuellement proposés à la normalisation de la transmission de la télévision numérique sur des canaux à 34 Mbit/s (CMTT/2-DCT group chairman report) et pour les systèmes de visioconférence à 384 Kbit/s (description of reference model 6).

Le dispositif suivant l'invention est notamment compatible avec ces normes.

Plus précisément, l'invention s'applique à des systèmes de transmission comprenant notamment des étapes de découpage de l'image en blocs et de transformation mathématique réversible.

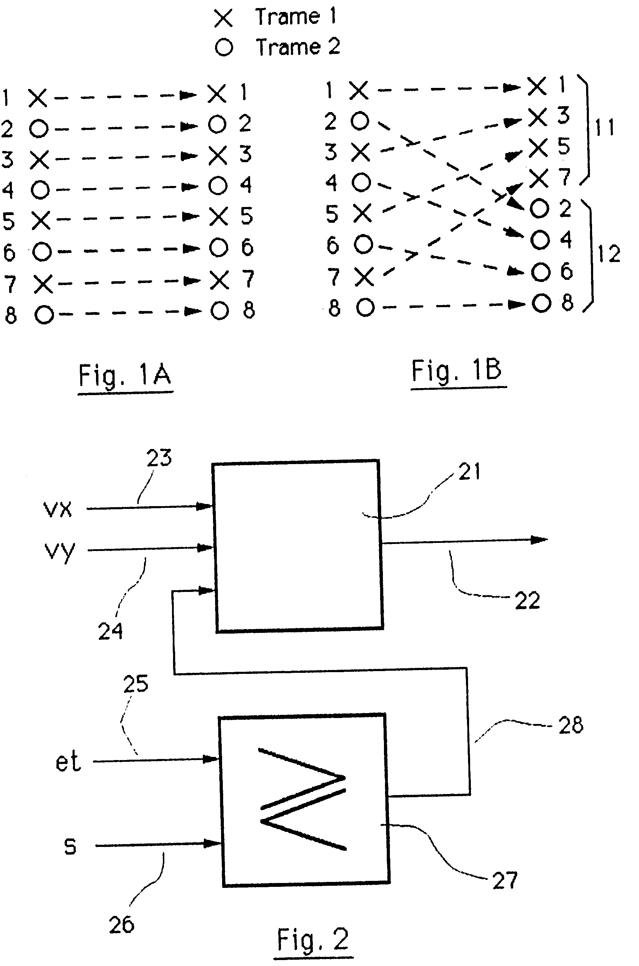

Ainsi que cela est illustré en figure 1A et 1B pour des blocs constitués de 8 lignes, l'invention propose de réarranger l'ordre des blocs à transformer de façon adaptative.

Dans l'exemple de réalisation décrit en détail ci-dessous, l'invention permet d'effectuer sélectivement soit un codage par trame, soit un codage par image, à l'aide d'une transformation de taille unique, selon notamment une information de mouvement.

Dans un premier cas, illustré par la figure 1A et correspondant à un bloc dans lequel le mouvement est faible, ou nul, on choisit d'effectuer un codage par image. L'ordre des lignes du bloc d'origine est alors reconduit à l'identique. On peut ainsi profiter au maximum de la corrélation dans le bloc.

En revanche, on a vu qu'il était préférable de traiter séparément chacune des trames de l'image, lorsque le mouvement devient relativement important. Dans le cas contraire, le rendu des contours n'est pas net. L'invention réalise alors, ainsi que représenté en figure 1B, le regroupement 11 des lignes appartenant à la première trame d'une part, et le regroupement 12 des lignes appartenant à la seconde trame d'autre part.

Ainsi les deux trames sont pratiquement complètement décorrélées, et la transformation en une opération du bloc constitué des deux groupes de lignes 11 et 12 fournit un résultat très proche de celui que l'on obtiendrait par la transformation indépendante de deux blocs de 4 x 8 correspondant à chacune des trames.

Pour un codage par trame, il est essentiel que les lignes de chacune des trames soient regroupées. En revanche, il n'est pas obligatoire que l'ordre interne des lignes de chaque trame soit reconduit, ainsi que cela est illustré en figure 1B. Il est en effet possible de réaliser un brassage interne de ces lignes, éventuellement de façon adaptative. Par exemple, on peut prévoir de sélectionner, dans le cas d'un codage par trame, soit la conservation de l'ordre des lignes, de façon à profiter de la corrélation dans la trame, soit un brassage assurant la décorrélation des lignes, en fonction d'une analyse psychovisuelle du bloc concerné.

Par ailleurs, l'invention ne se limite pas à la sélection trame/image.

En effet, il est envisageable que la décision et/ou le réarrangement des lignes prennent en compte plusieurs images ou trames successives. En fonction d'une analyse psychovisuelle, l'ordre des lignes à transformer peut ainsi être réarrangé, par exemple de façon à profiter de la corrélation éventuelle entre deux images successives.

On présente ci-dessous un mode de réalisation d'un disposif selon l'invention, insérable notamment dans un codeur et un décodeur numériques, pour la diffusion de la télévision à un débit compris entre 5 et 10 Mbits/s. Un exemple de tels codeur et décodeur sont plus précisément décrits par la suite.

Une des premières opérations du codeur est d'entrelacer les deux trames afin de travailler sur l'image. Le balayage de l'image en lignes est ensuite converti en un balayage en blocs de 8 points par 8 lignes. A ce stade, chaque bloc est formé de huit lignes consécutives de l'image.

Ainsi qu'on l'a déjà expliqué, dans un système de docage classique, les points d'images correspondant à un bloc de 8 points par 8 lignes sont présentées en entrée de l'opération de transformation discrète en cosinus sous la forme d'une suite de valeurs sur 8 bits au rythme point et dans l'ordre croissant de numéro de point et de numéro de ligne dans le bloc.

Le dispositif de l'invention se caractérise en revanche par une opération de commutation trame/image, consistant, en fonction de la décision de codage en image ou en trame, dans le premier cas à présenter les points dans l'ordre habituel (ordre croissant point et ordre croissant ligne) (figure 1A) et dans le second cas, toujours dans l'ordre croissant point, mais en présentant d'abord les lignes impaires (lignes 1, 3, 5 et 7 du bloc issues d'une même trame) puis les lignes paires du bloc (lignes 2, 4, 6 et 8 issues de la trame suivante) (figure 1B).

La décision de commutation trame/image est basée sur l'amplitude des vecteurs de mouvement calculés et sur l'erreur de prédiction fournis par un estimateur de mouvement.

Si l'amplitude des vecteurs de mouvement est forte, la corrélation verticale dans l'image est faible et il est alors préférable de choisir le codage dans la trame.

De plus, lorsque les capacités de l'estimateur de mouvement sont dépassées, ce qui est le cas lorsque l'amplitude du mouvement est plus grande que la fenêtre de l'image sur laquelle l'estimateur travaille, le vecteur optimal dans la fenêtre peut être d'amplitude faible et fournit alors une erreur de prédiction importante : en ce cas le codage dans la trame est également choisi.

La figure 2 illustre fonctionnellement le mécanisme de la décision trame. Un module 21 de décision fournit une information 22 de décision trame/image, sur 1 bit. Ce module 21 prend en compte d'une part les deux composantes vx 23 et vy 24 du vecteur de mouvement, codées chacune sur 5 bits en complément à deux, ce qui correspond à des amplitudes de + 7,5 points avec une précision de 1/2 pas, et d'autre part la valeur 25 de l'erreur de prédiction (différence entre le bloc source et sa prédiction dans le sens du mouvement) sur 8 bits.

Plus précisément, l'erreur de prédiction $e_t$ 25 est comparée au seuil s 26 dans un module 27 de comparaison qui fournit le résultat 28 de la comparaison, sur 1 bit, au module 21 de décision.

6

Ce modue 21 de décision peut par exemple être une table, associant à un mot de 11 bits en entrée, constitué des deux vecteurs vx 23 et vy 24 et du bit 28 de résultat de la comparaison, un bit 22 de décision.

Ce module 21 fonctionne de la façon suivante : si l'une des deux composantes du vecteur de mouvement est strictement supérieure en valeur absolue à 1 ou si la valeur de l'erreur de prédiction est supérieure à 100, alors le mode trame est choisi. Le mode image est choisi dans le cas contraire.

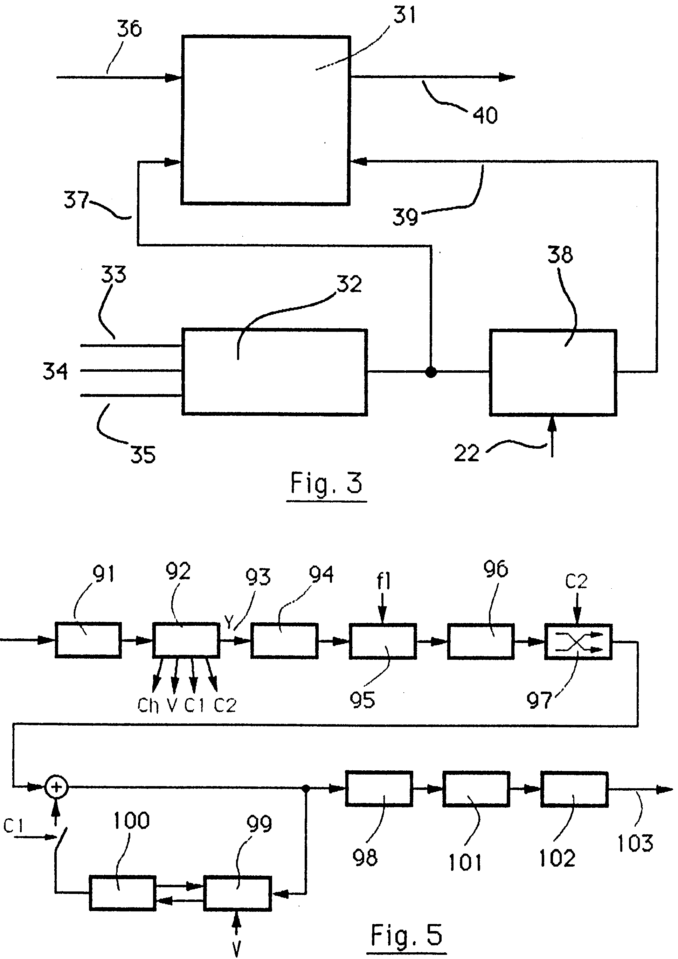

La commutation trame/image est illustrée en figure 3.

Le dispositif de l'invention comprend notamment une mémoire de blocs 31, comprenant 64 points, et un compteur de lecture/écriture 32, piloté par des horloges point 33, début de ligne dans le bloc 34 (tous les 8 points), début de bloc 35 (tous les 64 points). Ces horloges sont en phase avec le premier point du bloc.

La mémoire 31 reçoit en entrée les valeurs 36 des points du bloc sur 9 bits. Ces valeurs sont notées $x_{ij}$ où i est l'indice de ligne et j l'indice de point dans la ligne. Les indices i et j varient de 1 à 8.

L'adresse d'écriture 37 dans la mémoire 31 est calculée par le compteur 32 sur 6 bits $b_i$ qui s'incrémente en fonction des horloges points 33 et ligne 34.

La relecture de la mémoire 31, dirigeant les valeurs des points 40 vers le module de transformation, est pilotée par un module 38 de gestion de l'ordre d'adressage, en fonction de l'information 22 de décision trame/image (voir figure 2). Si le codage en mode image est sélectionné, l'action du module 38 est transparente : l'adresse de lecture 39 est identique à l'adresse d'écriture. En revanche, si le codage en mode trame est choisi, le module 38 modifie l'adressage de la mémoire 31, de façon qu'elle soit lue dans l'ordre croissant des indices j, puis dans l'ordre croissant des i impairs, et enfin des i pairs.

Dans le cas d'un bloc de 64 points, les adresses sont codées sur 6 bits. Soit $b_i$, i variant de 1 à 6, l'adresse d'écriture d'un point, $b_1\ b_2\ b_3$ correspondant au numéro de ligne, et $c_i$, i variant de 1 à 6, l'adresse de lecture. Il suffit, pour passer du mode image au mode trame d'effectuer un décalage à gauche d'une position des bits du compteur de lignes d'écriture pour obtenir le numéro de ligne à lire. En d'autres termes, en mode trame, l'adresse $c_1\ c_2\ c_3\ c_4\ c_5\ c_6$ correspond à l'adresse $b_2\ b_3\ b_1\ b_4\ b_5\ b_6$.

La table I suivante résume l'adressage de lecture dans les deux cas de codage par image ou par trame.

## TABLE I

| compteur ligne | lecture image | | lecture trame | |
|---|---|---|---|---|
| b1 b2 b3 | adresse b1 b2 b3 | numéro de ligne | adresse b2 b3 b1 | numéro de ligne |
| 0 0 0 | 0 0 0 | 1 | 0 0 0 | 1 |
| 0 0 1 | 0 0 1 | 2 | 0 1 0 | 2 |
| 0 1 0 | 0 1 0 | 3 | 1 0 0 | 3 |
| 0 1 1 | 0 1 1 | 4 | 1 1 0 | 4 |
| 1 0 0 | 1 0 0 | 5 | 0 0 1 | 5 |
| 1 0 1 | 1 0 1 | 6 | 0 1 1 | 6 |
| 1 1 0 | 1 1 0 | 7 | 1 0 1 | 7 |
| 1 1 1 | 1 1 1 | 8 | 1 1 1 | 8 |

Au décodeur, des opérations de même type sont effectuées. Cependant l'information de décision de traitement trame ou image n'est pas recalculée : elle est extraite du train binaire transmis.

En entrée du module de commutation trame/image du décodeur sont donc présentées :

– l'information de décision de commutation trame/image sur 1 bit ;

– les valeurs des 64 points du bloc tels qu'ils ont été transmis au codeur;

– les horloges appropriées : point, début de ligne (tous les 8 points), début de bloc (tous les 64 points).

En sortie les valeurs des points du bloc sont réordonnées soit dans l'ordre croissant de numéro de ligne dans le cas du codage en image, soit dans l'ordre suivant qui permet le réentrelacement des lignes : numéros de ligne 1, 5, 2, 6, 3, 7, 4, 8.

On présente maintenant une description d'un codeur et d'un décodeur mettant en oeuvre le dispositif ci-dessus. Il est clair que ces codeur et décodeur sont décrits à titre d'exemple, et que le dispositif de l'invention peut trouver des applications dans de nombreux autres systèmes de codage d'images numériques.

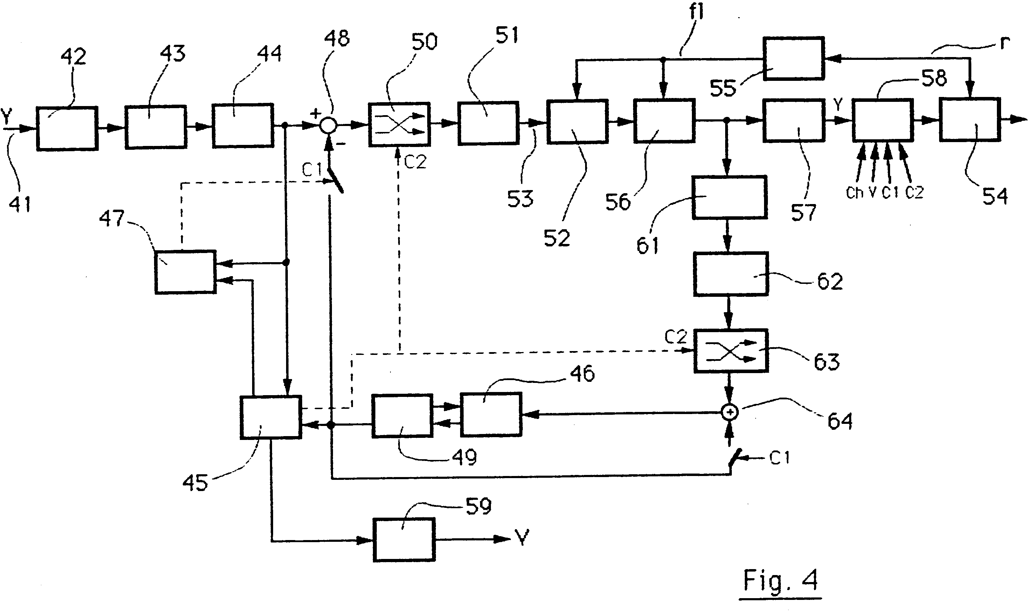

Dans ce codeur, la composante de luminance Y et les composantes de chrominance Ch subissent des traitements distincts. En effet, seule la chaîne de codage de la luminance (figure 4) comprend un dispositif selon l'invention. Les signaux de chrominance sont quant à eux échantillonnés à une fréquence moitié de celle du signal de luminance, ce qui correspond à la transmission d'une ligne sur deux. La commutation trame/image n'a donc pas lieu d'être. Le principe général du codage de la chrominance, proche de celui décrit pour la luminance, à l'exception du réarrangement de l'ordre des lignes des blocs, n'est pas décrit.

Bien sûr, l'invention n'est pas limitée à un tel signal. Elle s'applique également aux signaux vidéo composites, et plus généralement à tous signaux numériques d'image appartenant à une séquence d'images.

La figure 4 présente donc une chaîne de codage de la luminance.

Le format d'entrée des informations vidéo dans ce codeur est le format 4:2:2, conformément à la recommandation AD/CMTT du CCIR.

Les informations 41 de luminance entrent au rythme de 13,5 MHz et sont échantillonnées linéairement sur 8 bits.

Pour la transmission, seule est retenue l'information utile du signal image, c'est-à-dire 288 lignes par trame et 702 échantillons par ligne.

Les échantillons 41 de luminance sont filtrés et sous-échantillonnés dans un rapport 3/2 afin d'obtenir un nouveau train numérique à 9 Mhz. Après filtrage horizontal 42 les échantillons de luminance, toujours représentés sur 8 bits, sont stockés dans une mémoire d'image 43.

Le filtre 42 utilise avant sous-échantillonnage est par exemple un filtre RIF (à réponse impulsionnelle finie).

La transformation utilisée dans le codage est effectuée sur des blocs de 8 points par 8 lignes extraits de l'image. Il s'agit ici d'une transformation en cosinus discret (DCT). Toutefois, toute transformée mathématique réversible est utilisable, et notamment les transformées de Fourier, de Haar ou de Hadamard.

La taille des blocs est évidemment donné à titre indicatif. Il s'agit d'une taille sensiblement optimum, vis à vis de l'homogénéité du mouvement. Toutefois, tout format de bloc peut être utilisé pour l'invention. On péeférera cependant, en vue de la transformation, et bien que cela ne soit pas obligatoire, des blocs carrés de largeur égale à une puissance de deux.

Afin de fournir ces blocs au module de transformation, il est nécessaire de modifier l'ordre de lecture des échantillons de luminance. Ceci est effectué en deux étapes. Dans un premier temps, les deux trames de l'image de télévision sont réentrelacées dans la mémoire 43. Ensuite, la lecture ligne par ligne de l'image est remplacée par une lecture par blocs de 8 points par 8 lignes dans le module 44 de découpage par blocs. Le rythme de lecture reste de 9 Mhz.

L'estimation de mouvement 45 est effectuée par une mise en correspondance de blocs (block matching). Chaque bloc de l'image à coder est comparé à un ensemble de blocs obtenus à partir de l'image précédente préalablement codée et mise en mémoire 46, par prédiction 49.

Pour chaque bloc, deux critères sont calculés et comparés dans un module 47 de choix "inter/intra", à savoir un critère d'erreur spatiale $e_s$ et un critère d'erreur temporelle $e_t$.

Si l'erreur spatiale est inférieure à l'erreur temporelle, le bloc spatial en cours est codé directement. Dans le cas contraire, c'est la différence entre le bloc spatial et le bloc prédit qui est codé.

Le critère de choix C1 "inter/intra" est transmis au décodeur. Il pilote par ailleurs un soustracteur 48, qui effectue ou non la différence entre le bloc spatial et le bloc prédit.

Selon l'invention, il est défini pour chaque bloc un deuxième critère C2, correspondant au codage en trame ou en image. Ce critère est basé sur l'amplitude des vecteurs de mouvement. En effet lorsque l'amplitude des mouvements est faible, le codage le plus efficace utilise des blocs dans l'image (meilleure corrélation verticale dans l'image que dans la trame). Lorsque, au contraire, l'amplitude des mouvements est forte, la corrélation verticale dans l'image faiblit très rapidement et le codage dans la trame devient plus efficace.

Le choix trame/image se fait donc de la façon suivante, $v_x$ représentant le mouvement horizontal et $v_y$ le mouvement vertical :

– si $|v_x| > 1$ ou $|v_y| > 1$ alors le codage se fait dans la trame,
– sinon il se fait dans l'image.

Après formation des blocs de 8 points sur 8 lignes, ceux-ci contiennent des lignes des deux trames entrelacées. Le codage en trame ou en image consiste, à l'intérieur du bloc 8x8 à garder les lignes entrelacées dans le cas du codage image et à les désentrelacer dans le cas du codage trame. Dans ce dernier cas, les quatre premières lignes du bloc appartiennent à une trame, les quatre autres lignes à l'autre trame. Ceci est réalisé par le module 50 de réarrangement, tel que décrit par exemple en relation avec la figure 2. La suite du codage est identique dans les deux cas.

Le choix C2 codage trame ou image est transmis au décodeur.

Les blocs éventuellement réarrangé dans le module 50 sont ensuite transformés par DCT 55. Après la DCT 55 les valeurs 53 sont codées sur 12 bits.

On effectue ensuite un seuillage 12 sur l'ensemble des coefficients transformés 13. Toutes les valeurs inférieures du seuil sont mises à zéro.

Le seuil est variable pour chaque coefficient. Le calcul du seuil est conforme au document AD/CMTT et prend notamment en compte une information d'encombrement du tampon 54 d'émission, fournie par un module 55 de régulation.

Deux matrices de seuils sont proposées dans le module 52 de seuillage pour le codage de la luminance : une pour le codage en trame, l'autre pour le codage en image.

Les données sont ensuite quantifiées. La quantification 56 des coefficients est linéaire. Le pas de quantification est égal au seuil calculé et chaque valeur est arrondie à l'entier le plus proche.

L'ensemble des coefficients, y compris la valeur continue, est quantifié.

On peut de plus distinguer le cas des blocs critiques. La notion de blocs critiques est introduite pour quantifier plus grossièrement des blocs ayant une forte activité.

Après quantification 56, les données sont codées, dans un module 57 de codage. Un code à longueur variable est appliqué sur les valeurs quantifiées des coefficients analysés l'ordre de balayage prédéfini, à l'aide d'un code à longueur variable.

Les données codées sont alors multiplexées (58) avec les informations de chrominance Ch, les deux indicateurs de choix C1 et C2 et les vecteurs de mouvement V. Ces vecteurs V sont codés dans le module 59.

Par ailleurs, cette chaîne de codage comprend des moyens de reconstruction de l'image identiques à ceux existant à la réception. Ils permettent de fournir l'image précédente stockée en mémoire 46. Ces moyens comprennent notamment un module 61 de quantification inverse, un module 62 de transformation inverse, un module 63 de réarrangement inverse de l'ordre des lignes et un additionneur 64.

Les décodeurs de signaux transmis à l'aide d'un tel codeur comprennent des chaînes de décodage de la composante de luminance et des composantes de chrominance, réalisant les opérations inverses du codage.

La figure 5 présente une chaîne de décodage de luminance, que l'on décrit ci-dessous rapidement. Elle comprend une mémoire de réception tampon 91, puis un module de démultiplexage 92. Le signal 93 de luminance est ensuite successivement soumis aux modules 94 de codage inverse CLV (codage à longueur variable), 95 de quantification inverse, 96 de transformation inverse et 97 de réarrangement inverse de l'ordre des lignes, 98 de reconstruction des blocs, en fonction éventuellement de l'image précédente stockée en mémoire 99 et du module 100 de prédiction.

L'image est reconstruite dans une mémoire d'image 101, puis subit un filtrage inverse 102 permettant de restituer une composante de luminance 103 échantillonnée à 13,5 Mhz.

Il est clair que le mode de réalisation donné ci-dessus est purement illustratif. L'invention concerne bien sûr tous les décodeurs de signaux transmis par un codeur mettant en oeuvre un dispositif de réarrangement de l'ordre des lignes de chaque bloc en fonction d'une information phychovisuelle. L'invention concerne également les dispositifs de stockage et/ou de lecture de séquences d'images numériques codées selon le procédé de l'invention.

Par ailleurs, il est évident que l'invention n'est pas limitée à la transmission de signaux de télévision. Elle peut s'appliquer par exemple également à la visiophonie, l'interphonie, la robotique, l'imagerie médicale, au stockage d'images, et plus généralement à tous les domaines où il est nécessaire de coder à un débit réduit des séquences d'images numériques.

## Revendications

1. Dispositif de codage d'images numériques appartenant à une séquence d'images, du type comprenant des moyens (44) de découpage de chacune desdites images en blocs d'image et des moyens (51) de transformation mathématique desdits blocs d'image,

   caractérisé en ce qu'il comprend des moyens (38 ; 50) de réarrangement de l'ordre des lignes constitutives de chacun desdits blocs avant ladite transformation mathématique (51), ledit réarrangement étant variable en fonction d'une information (22 ; C2) de décision émise par des moyens (21 ; 45) d'analyse psychovisuelle.

2. Dispositif selon la revendication 1, caractérisé en ce que lesdits moyens (38 ; 50) de réarrangement de l'ordre des lignes assurent, dans une première position (fig. 1A), la conservation de l'ordre d'origine dans l'image desdites lignes, et dans une seconde position (fig. 1B), le regroupement d'une part des lignes impaires (11), et d'autre part des lignes paires (12).

3. Dispositif selon l'une quelconque des revendications 1 et 2, caractérisé en ce que lesdits moyens (21 ; 45) d'analyse psychovisuelle prennent en compte l'amplitude du mouvement (23 ; 24) dans ledit bloc et/ou l'erreur de prédiction (25) fournies par des moyens (45) d'estimation du mouvement.

4. Dispositif selon l'une quelconque des revendications 2 et 3, du type appliqué au codage de blocs dont le nombre de lignes est une puissance entière de 2, caractérisé en ce que lesdits moyens (38 ; 50) de réarrangement de l'ordre des lignes comprennent une mémoire de bloc (31) et des moyens (32,38) d'adressage de ladite mémoire de bloc (31), lesdits moyens d'adressage comprenant un compteur de lignes (32) et des moyens (38) de décalage d'une position vers la gauche de la valeur binaire produite par ledit compteur, lesdits moyens (38) de décalage étant actifs lorsque lesdits moyens de réarrangement sont dans ladite seconde position.

5. Dispositif selon l'une quelconque des revendications 1 à 4, caractérisé en ce que lesdits blocs sont des blocs de 4x4, 8x8, ou 16x16 pixels.

6. Dispositif selon l'une quelconque des revendications 1 à 5, caractérisé en ce que ladite transformation mathématique (51) appartient au groupe comprenant:
   – transformation en cosinus discret (TCD) ;
   – transformation de Fourier ;
   – transformation de Haar ;
   – transformation de Hadamard.

7. Système de transmission d'images numériques appartenant à une d'images, comprenant un dispositif de décodage d'images selon l'une quelconque des revendications 1 à 6,
   caractérisé en ce qu'il comprend, à l'émission, des moyens (58) de transmission d'une information (C2) de sélection du type de réarrangement effectué sur chacun desdits blocs, et à la réception, des moyens (97) de reconstruction desdits blocs en fonction de ladite information (C2) de sélection.

8. Système selon la revendication 7, appliqué à la transmission d'un signal de télévision comprenant une composante (Y) de luminance et au moins une composante (Ch) de chrominance,
   caractérisé en ce que seule ladite composante (Y) de luminance est appliquée audit dispositif de codage, lesdites composantes (Ch) de chrominance étant systématiquement sous-échantillonnées de façon à ne transmettre qu'une ligne sur deux de l'image.

9. Récepteur d'un système de transmission selon l'une quelconque des revendications 7 et 8.

10. Procédé de codage d'images numériques appartenant chacune à une séquence d'images, caractérisé en ce qu'il comprend les étapes suivantes :
    – découpage (44) de chacune desdites images en blocs d'image ;
    – analyse psychovisuelle (45,47) de chacun desdits blocs, et émission d'une information (C2) de décision ;
    – réarrangement (50) de l'ordre des lignes constitutives de chacun desdits blocs en fonction de ladite information de décision ;
    – transformation (51) mathématique réversible de chacun desdits blocs réarrangés.

X  Trame 1
O  Trame 2

Fig. 1A

Fig. 1B

Fig. 2

Fig. 3

Fig. 5

Fig. 4



EP 0 490 799 A1

Office européen
des brevets

**RAPPORT DE RECHERCHE EUROPEENNE**

Numero de la demande

EP    91 46 0050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 849 812 (STEPHANUS M. C. BORGERS ET AL) * colonne 2, ligne 47 - colonne 9, ligne 12; figures 1-4 * | 1-7,10 | H04N7/133 |
| A | | 8,9 | |
| | --- | | |
| X | PROCEEDINGS OF THE SPIE vol. 1244, 12 Février 1990, BELLINGHAM, WA, USA pages 378 - 381; WIELAND JASS ET AL: 'A hybrid DCT-codec with local adaptivity for the interlaced HDTV transmission with 140 Mbits/s' * page 378 - page 381; figures 1-6 * | 1-3,10 | |
| A | | 4-9 | |
| | ----- | | |
| | | | **DOMAINES TECHNIQUES RECHERCHES (Int. Cl.5)** |
| | | | H04N |

Le présent rapport a été établi pour toutes les revendications

| Lieu de la recherche | Date d'achèvement de la recherche | Examinateur |
|---|---|---|
| BERLIN | 23 JANVIER 1992 | C. DUDLEY |

14